## Europäisches Patentamt
## European Patent Office
## Office européen des brevets

(19)

(11) Veröffentlichungsnummer: **0 150 061**
**B1**

(12)

# EUROPÄISCHE PATENTSCHRIFT

(45) Veröffentlichungstag der Patentschrift:
**07.12.88**

(51) Int. Cl.⁴: **A 01 K 89/01**, A 01 K 89/02

(21) Anmeldenummer: **85100510.8**

(22) Anmeldetag: **18.01.85**

(54) **Angelwinde.**

(30) Priorität: **20.01.84 DE 3401945**

(43) Veröffentlichungstag der Anmeldung:
**31.07.85 Patentblatt 85/31**

(45) Bekanntmachung des Hinweises auf die Patenterteilung:
**07.12.88 Patentblatt 88/49**

(84) Benannte Vertragsstaaten:
**AT BE DE FR GB IT NL**

(56) Entgegenhaltungen:
**CH-A- 265 430**
**FR-A- 2 101 265**
**US-A- 2 624 523**
**US-A- 2 863 617**
**US-A- 2 879 954**
**US-A- 4 249 706**

(73) Patentinhaber: **Cormoran Sportartikel-Vertrieb von Keller und Willenbruch GmbH, Benzstrasse 20, D-8039 Puchheim/Bf. (DE)**

(72) Erfinder: **Schuster, Reinhold, Peter-Rosegger-Strasse 49, D-8039 Puchheim (DE)**

(74) Vertreter: **Schaumburg, Thoenes & Englaender, Mauerkircherstrasse 31 Postfach 86 07 48, D-8000 München 80 (DE)**

## Beschreibung

Die Erfindung betrifft eine Angelwinde gemäss US-A-2 879 954, umfassend ein Gehäuse, eine mit einer axial hin und her verschiebbaren Welle verbundene stationäre Schnurrolle, eine koaxial zu dieser drehbar gelagerte Spultrommel mit Schnurfangbügel, die mittels einer Handkurbel über ein Getriebe antreibbar ist, wobei die axiale Bewegung der Schnurrolle mit der Drehbewegung der Spultrommel über das Getriebe gekoppelt ist, und eine einstellbare Reibungsbremse zum Bremsen der Schnurrollendrehung mit einem mit der Schnurrollenachse drehfest verbundenen ersten Bremswiderlager, einem axial verstellbaren, gegenüber dem Gehäuse unverdrehbaren zweiten Bremswiderlager.

Die Reibungsbremse kann zwischen einer sehr geringen Bremswirkung und einer vollständigen Blockierung der Schnurrolle verstellt werden. Selbst bei einer vollständig geöffneten Bremse ist jedoch immer noch eine geringe Bremswirkung vorhanden, so dass die Schnurrolle einem freien Ablaufen der Leine einen nicht zu vernachlässigenden Widerstand entgegensetzt. Dies ist beispielsweise nachteilig, wenn ein Fisch an einem Köder angebissen hat und mit dem Köder abziehen will, da er unter Umständen von dem Köder ablässt, wenn er Widerstand beim Abziehen spürt. Der Abzugswiderstand kann zwar weitgehend dadurch beseitigt werden, dass der Schnurfangbügel aufgeklappt wird. Zum einen ist dies aber umständlich, zum anderen besteht die Gefahr, dass bei geöffnetem Bügel der Wind leicht Schnur von der Rolle nehmen kann. Beim langsamen Abziehen des Fisches kann unter Umständen auch zu viel Schnur von der Rolle springen und sich verhängen. Die Schnur kann zudem bei geöffnetem Bügel nicht straff gehalten werden, um auch ein leichtes Abziehen des Fisches sichtbar zu machen.

Der Erfindung liegt die Aufgabe zugrunde, eine Angelwinde der eingangs genannten Art anzugeben, bei der die Schnur mindestens annähernd widerstandfrei von der Schnurrolle abziehbar ist, ohne dass hierzu der Schnurfangbügel geöffnet werden muss.

Diese Aufgabe wird erfindungsgemäss dadurch gelöst, dass zwischen den beiden Bremswiderlagern eingespannten Bremsscheiben angeordnet sind, dass das erste Bremswiderlager eine die Bremsscheiben axial abstützende, gegenüber der Schnurrollenwelle frei drehbare Lagerhülse und eine mit der Schnurrollenwelle drehfest, aber axial verschiebbar verbundene Kupplungshülse umfasst und dass die Lagerhülse und die Kupplungshülse zum Eingriff miteinander bestimmte Kupplungsmittel aufweisen, die durch eine Axialverschiebung der Kupplungshülse in und ausser Eingriff bringbar sind.

Bei der erfindungsgemässen Angelwinde ist es möglich, durch eine Verschiebung der Kupplungshülse die Reibungsbremse vollständig auszuschalten. Dadurch kann die Angelschnur nahezu widerstandsfrei von der Schnurrolle über den Schnurfangbügel hinweg abgezogen werden. Der verbleibende Drehwiderstand der Schnurrolle aufgrund der Lagerreibung ist unter Umständen sogar erwünscht um ein freies Nachlaufen der Schnurrolle und damit das Ablaufen von zu viel Schnur von der Schnurrolle zu verhindern. Neben der Beseitigung der oben genannten Nachteile hat die erfindungsgemässe Lösung eine Reihe weiterer Vorteile. Beim Spinnfischen im Fliessgewässer mit Wobbler, Spinner oder totem Köderfisch kann man den Köder abtreiben lassen, ohne den Schnurfangbügel öffnen zu müssen. Beim Spinnfischen im ruhigen Wasser mit totem Köderfisch kann man nach dem Anbiss sofort den Leerlauf der Schnurrolle einstellen, damit der Fisch mit dem Köder abziehen kann, ohne Widerstand zu spüren. Wenn es erforderlich sein sollte, kann durch einfaches Verschieben der Kupplungshülse die Reibungsbremse sofort mit der dann eingestellten Bremskraft eingeschaltet werden. Man kann mit eingestelltem Leerlauf den Köder auf grössere Entfernung ablaufen lassen, ohne dass der Schnurfangbügel geöffnet werden muss. Ebenso kann bei geschlossenem Bügel der Zokker oder Pilker in der Leerlaufstellung der Schnurrolle abgelassen werden. Will man beim Spinnfischen in ruhigem Wasser den Blinker oder Spinner sehr tief führen, so muss man entweder ganz langsam die Schnur einholen oder nach einem gewissen Einholweg den Köder wieder absinken lassen, weil dieser durch das Einholen meistens in höhere Gewässerregionen kommt. Mit der Schnurrolle in ihrer Leerlaufstellung kann der Köder Schnur abziehen und langsam absinken.

Ist beispielsweise der Fisch zu stark und die Bremse zu stark eingestellt, kann man bei der erfindungsgemässen Angelwinde durch das Ausschalten der Bremse die Schnurrolle auf Leerlauf schalten, so dass der Fisch abziehen kann. Anschliessend hat man ausreichend Zeit, um die Bremse entsprechend leichter einzustellen.

Die Kupplungsmittel können von einer Keilverzahnung gebildet sein, die an koaxial ineinander schiebbaren Umfangsflächen von Lagerhülse und Kupplungshülse ausgebildet ist. Eine andere Möglichkeit besteht darin, die Kupplungsmittel in Form von Kupplungsklauen auszubilden, die an einander zugekehrten achsnormalen Flächen von Lagerhülse und Kupplungshülse ausgebildet sind.

Um ohne Veränderung der Bremseinstellung eine vollständige Blockierung der Schnurrolle zu erreichen, können an der Kupplungshülse und dem Gehäuse zweite zum Eingriff miteinander bestimmte Kupplungsmittel ausgebildet sein, die durch eine Axialverschiebung der Kupplungshülse in eine zweite Kupplungsstellung in Eingriff bringbar sind. Auf diese Weise ist es mit den gleichen konstruktiven Mitteln möglich, eine weitere Kupplungsstellung vorzusehen, in der die Schnurrolle gegen ein Abziehen der Schnur völlig gesperrt ist. Auch diese Kupplungsmittel können in Form von Kupplungsklauen ausgebildet sein, die an einander zugekehrten achsnormalen Flächen des Gehäuses und der Kupplungshülse ausgebildet sind. Die ersten und zweiten Kupplungsmittel können dabei so angeordnet sein, dass die Kupplungshülse in ihre erste bzw. zweite Kupplungsstellung nach entgegengesetzten Richtungen verschoben wird, wobei die Leerlaufstellung zwischen den beiden Kupplungsstellungen liegt. Es ist jedoch auch möglich, die Kupplungsmittel so anzuordnen, dass die erste und zweite Kupplungsstellung durch eine schrittweise Verschiebung der Kupplungshülse in der gleichen Richtung erreicht werden.

Eine vorteilhafte Ausgestaltung der Erfindung zieht vor, dass die Kupplungshülse in ihre erste Kupplungsstellung vorgespannt ist, so dass normalerweise die Reibungsbremse eingeschaltet ist. Vorzugsweise ist die Kupplungshülse über einen Schieber betätigbar, der mit einem Fortsatz in einer Ringnut an der Kupplungshülse eingreift. Zweckmässigerweise sind Rastmittel vorgesehen, um den Schieber in seiner der jeweiligen Stellung der Kupplungshülse entsprechenden Stellung festzuhalten.

Bei einer bevorzugten Form der Erfindung umfasst das zweite Bremswiderlager ein mit einem Zahnkranz versehenes, in ein gehäusefestes Innengewinde koaxial zur Schnurrollenwelle einschraubbares Einstellrad, dessen Zahnkranz mit einem Zahnrad oder Schneckenrad kämmt, das drehfest mit einem vorzugsweise unmittelbar neben der Handkurbel am Gehäuse gelagerten Einstellknopf verbunden ist. Zum einen ist dadurch die Betätigung des Einstellknopfes der Bremse mit derselben Hand möglich, mit der auch die Handkurbel betätigt wird, ohne die Handkurbel loslassen zu müssen. Zum anderen ermöglicht diese Anordnung des Einstellrades der Bremseinrichtung einen konstruktiv einfacheren Aufbau der Angelwinde.

Weitere Merkmale und Vorteile der Erfindung ergeben sich aus den Unteransprüchen und der folgenden Beschreibung, welche in Verbindung mit den beigefügten Zeichnungen die Erfindung anhand eines Ausführungsbeispieles erläutert. Es zeigen:

Fig. 1 einen schematischen, die Achse enthaltenden Schnitt durch das Gehäuse einer ersten Ausführungsform der erfindungsgemässen Angelwinde und

Fig. 2 einen der Fig. 1 entsprechenden Schnitt durch eine zweite Ausführungsform der Erfindung.

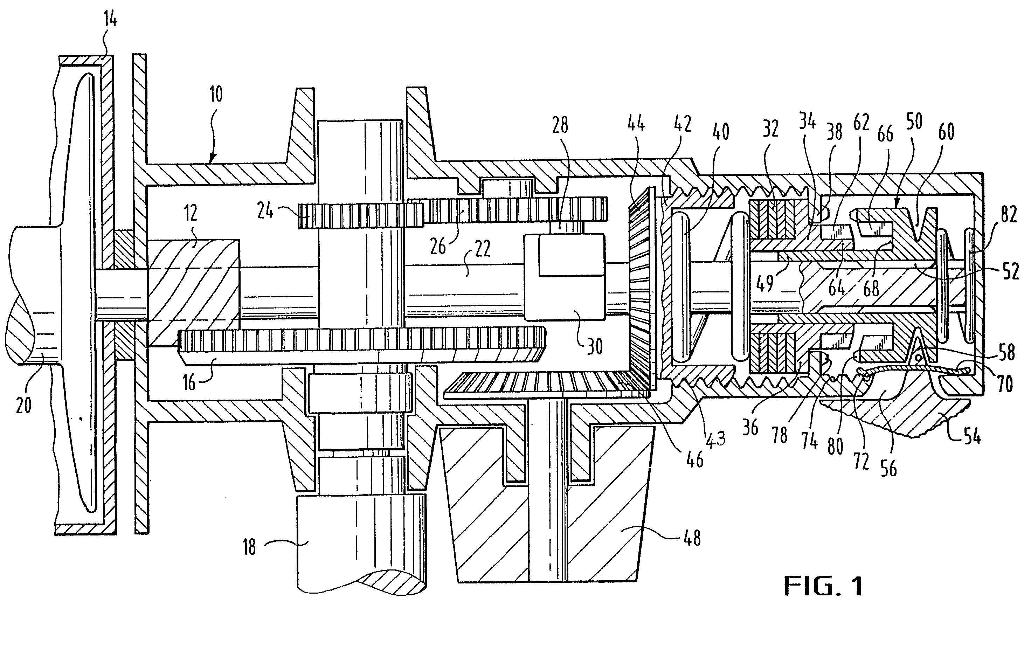

Die in der Fig. 1 teilweise schematisch dargestellte Angelwinde umfasst ein allgemein mit 10 bezeichnetes Gehäuse, an dem mittels einer Hohlwelle 12 eine nur angedeutete Spultrommel 14 drehbar gelagert ist. Die Hohlwelle 12 trägt auf ihrer Aussenseite eine Schneckenverzahnung und kämmt mit einem Antriebszahnrad 16, das mit einer in dem Gehäuse 10 drehbar gelagerten Handkurbel 18 drehfest verbunden ist. Die Spultrommel 14 ist in an sich bekannter Weise mit einem Schnurfangbügel verbunden, der jedoch nicht dargestellt ist.

Koaxial zur Spultrommel 14 ist eine ebenfalls nur teilweise dargestellte Schnurrolle 20 angeordnet, die drehfest mit einer die Hohlwelle 12 durchsetzenden Welle 22 verbunden ist. Die Welle 22 und damit die Schnurrolle 20 dreht sich bei der Betätigung der Handkurbel 18 nicht mit, wird jedoch in axialer Richtung hin und her verschoben. Hierzu dient ein Exzenterantrieb mit einem auf der Welle der Handkurbel 18 sitzenden zweiten Zahnrad 24, das mit einem an dem Gehäuse 10 drehbar gelagerten Zwischenzahnrad 26 kämmt. Dieses trägt einen Exzenterzapfen 28, der in eine mit der Welle 22 verbundene Kulissenführung 30 eingreift und bei einer Drehung der Handkurbel 18 dafür sorgt, dass die Welle 22 in Richtung ihrer Achse hin und her verschoben wird. Die Kulissenführung 30 ist dabei axial an der Welle 22 festgelegt, lässt aber eine freie Drehung der Welle 22 zu.

Die vorstehende Beschreibung zeigt, dass die Schnurrolle 20 und mit ihr die Welle 22 frei drehbar sind, so dass bei Bedarf die Angelschnur frei von der sich mitdrehenden Schnurrolle 20 abgezogen werden kann, ohne dass hierzu der Schnurfangbügel geöffnet werden müsste. Zur Erzeugung und zur Einstellung eines Ablaufwiderstandes für die ablaufende Angelschnur dient eine mit der Welle 22 koppelbare einstellbare Bremseinrichtung, die im folgenden nun beschrieben werden soll.

Die Bremseinrichtung umfasst ein Paket von Bremsscheiben 32, die auf einem Bremsscheibenträger 34 gelagert sind, der seinerseits auf der Welle 22 frei drehbar gelagert ist und sich mit einem Radialflansch 36 an einem radial nach innen gerichteten Gehäuseflansch 38 axial abstützt. Auf der dem Flansch 36 entgegengesetzten Seite liegt an dem Bremsscheibenpaket eine Schraubendruckfeder 40 an, die sich mit ihrem entgegengesetzten Ende an einem Einstellrad 42 abstützt, das in ein im Gehäuse 10 ausgebildetes Innengewinde 43 einschraubbar ist. Das Einstellrad 42 trägt einen Zahnkranz 44, der mit einem rechtwinklig zu ihm angeordneten Zahnrad 46 kämmt, das drehfest mit einem im Gehäuse 10 achsparallel zur Handkurbel 18 gelagerten Einstellknopf 48 verbunden ist. Der Einstellknopf 48 ist so nahe neben der Handkurbel 18 angeordnet, dass er mit der die Handkurbel haltenden Hand der Bedienungsperson verdreht werden kann, ohne dass die Bedienungsperson die Handkurbel 18 loslassen muss. Durch Verdrehen des Einstellknopfes 48 und damit des Einstellrades 42 wird die Schraubendruckfeder 40 mehr oder weniger zusammengepresst, wobei das Bremsscheibenpaket 32 mehr oder weniger stark zusammengepresst und der Flansch 36 des Bremsscheibenträgers 34 mehr oder weniger stark gegen den radialen Gehäuseflansch 38 gespannt wird.

Der Bremsscheibenträger 34 ist auf dem axialen Fortsatz 49 einer Kupplungshülse 50 frei drehbar gelagert, die axial verschiebbar auf der Welle 22 gelagert und über eine Keilverzahnung 52 drehfest mit der Welle 22 verbunden ist. Die Kupplungshülse 50 ist in der Fig. in ihrer kupplungsfreien Stellung dargestellt, in welcher sie nicht in Eingriff mit dem Bremsscheibenträger 34 steht. Somit ist die Welle 22 unbeeinflusst von der Bremseinrichtung frei drehbar. Die Schnurrolle 20 befindet sich somit in ihrer Leerlaufstellung, so dass die Angelschnur von der Schnurrolle frei ohne Widerstand abgezogen werden kann, auch wenn der Schnurfangbügel nicht geöffnet ist.

Aus der in der Fig. 1 dargestellten Leerlaufstellung ist die Kupplungshülse 50 auf der Welle 22 mittels eines Schiebers 54 verstellbar, der in einer schlitzförmigen Öffnung 56 des Gehäuses 10 achsparallel verschiebbar ist und mit einem Fortsatz 58 in eine Ringnut 60 in der Kupplungshülse 50 eingreift. Die Kupplungshülse 50 ist mit dem Bremsscheibenträger 34 über eine Keilverzahnung drehfest verbindbar, die radial nach aussen gerichtete Zähne 62 an einem axialen Fortsatz 64 des Bremsscheibenträgers 34 und radial nach innen gerichtete Zähne 66 an einer topfförmigen Aussparung 68 in der Kupplungshülse 50 umfasst. Diese erste Kupplungsstellung der Kupplungshülse 50, in der diese eine drehfeste Verbindung zwischen dem Bremsscheibenträger 34 und der Welle 22 herstellt, wird durch eine mit dem Schieberfortsatz 58 verbundene Blattfeder 70 bestimmt, die mit einer Nase 72 in eine entsprechende Aussparung 74 an der Innenseite des Gehäuses 10 einrastet. In dieser Stellung der Kupplungshülse 50 wirkt die Bremseinrichtung entsprechend der Einstellung des Einstellrades 42 auf die Welle 22 und damit auf die Schnurrolle 20, um der ablaufenden Angelschnur einen gewissen Ablaufwiderstand entgegen zu setzen.

In einer zweiten Kupplungsstellung ist die Kupplungshülse 50 über eine Klauenkupplung mit dem radial nach innen gerichteten Gehäuseflansch 38 koppelbar, wodurch die Welle 22 über die Kupplungshülse 50 drehfest mit dem Gehäuse 10 verbindbar ist, so dass die Schnurrolle 20 vollständig blockiert wird. Hierzu sind an der dem Bremsscheibenpaket abgewandten Seite des Gehäuseflansches 38 Klauen 78 und an der dem Flansch 38 zugewandten achsnormalen Fläche der Kupplungshülse 50 Klauen 80 ausgebildet.

Die Kupplungshülse 50 ist durch eine Feder 82 in Richtung auf die erste Kupplungsstellung vorgespannt, in welcher die Kupplungshülse 50 in Eingriff mit dem Bremsscheibenträger 34 tritt. In die Leerlaufstellung muss die Kupplungshülse 50 entgegen der Spannkraft der Schraubendruckfeder 82 verschoben werden, während die Kupplungshülse 50 in die Blockierungsstellung ohne Einwirkung der Schraubendruckfeder 82 verschiebbar ist.

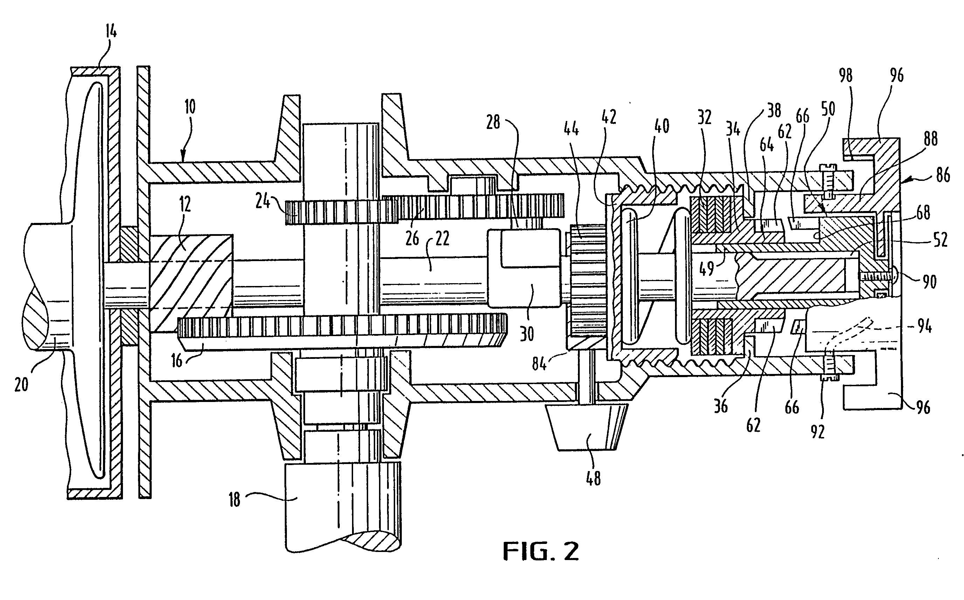

Bei der in der Fig. 2 dargestellten Ausführungsform der Erfindung sind gleiche Teile wiederum mit gleichen Bezugszeichen versehen und werden nicht noch einmal beschrieben. Die Ausführungsform gemäss Fig. 2 unterscheidet sich von jener der Fig. 1 im wesentlichen in zwei Punkten.

Anstelle des Zahnrades 46 ist ein Schneckenrad 84 vorgesehen, das mit dem Einstellknopf 48 drehfest verbunden ist. Diese Lösung erlaubt eine feinere Einstellung der Bremswirkung mit geringer Kraft.

Anstelle des Schiebers 54 zum Verstellen der Kupplungshülse 50 ist ein Drehknopf 86 vorgesehen, der mit einem rohrförmigen Schaftteil 88 koaxial zur Schnurrollenwelle 22 in das offene Ende des Gehäuses 10 eingesetzt und mit der in den Schaftteil 88 eingesteckten Kupplungshülse 50 durch eine Schraube 90 derart verbunden ist, dass die Kupplungshülse 50 und der Drehknopf 86 axial fest miteinander verbunden, jedoch relativ zueinander frei drehbar sind. In das Gehäuse 10 sind an zwei einander diametral gegenüberliegenden Stellen radial gerichtete Schraubbolzen 92 eingeschraubt, die mit ihren freien Enden jeweils in eine schraubenlinienförmige Nut 94 am Umfang des Schaftteiles 88 des Drehknopfes 86 eingreifen, wobei sich diese Nuten 94 über einen begrenzten Drehwinkel des Schaftteiles 88 erstrecken. Wird der Drehknopf 86 aus der in der Fig. 2 dargestellten Stellung im Uhrzeigersinn verdreht, so wird er gleichzeitig zusammen mit der Kupplungshülse 50 in der Fig. 2 nach links verschoben, so dass die Zähne 66 der Kupplungshülse 50 in die entsprechenden Zähne 62 des Bremsscheibenträgers 34 eingreifen. Der Drehknopf 86 weist zwei einander diametral gegenüberliegende Klauen 96 auf, die den offenen Rand des Gehäuses 10 übergreifen und an ihrer Innenseite halbkreisförmige Aussparungen 98 aufweisen, in welche auf der Aussenseite des Gehäuses 10 angeordnete, nicht dargestellte Vorsprünge einrasten können, wenn sich der Drehknopf 86 in seiner in der Fig. 2 linken Stellung befindet, in welcher die Kupplungshülse 50 in Eingriff mit dem Bremsscheibenträger 34 steht.

Es versteht sich, dass auch bei dieser Ausführungsform eine zweite Kupplungsstellung vorgesehen sein könnte, in welcher die Schnurrolle 20 vollständig blockiert wird. Diese Kupplungsstellung wurde der Einfachheit halber in dem dargestellten Ausführungsbeispiel nicht eingezeichnet.

Die vorstehende Beschreibung zeigt, dass mit der erfindungsgemässen Kupplungseinrichtung die Bremseinrichtung jederzeit ausgeschaltet und in einer vorgewählten Einstellung wieder eingeschaltet werden kann. Die erfindungsgemässe Einrichtung ist äusserst einfach in ihrem Aufbau und bequem zu handhaben. Der Einstellknopf der Bremseinrichtung befindet sich in unmittelbarer Nähe der Handkurbel und die Bremseinrichtung kann durch Betätigung des Schiebers ohne Mühe eingeschaltet bzw. ausgeschaltet werden.

## Patentansprüche

1. Angelwinde, umfassend ein Gehäuse (10), eine mit einer axial hin und her verschiebbaren Welle (22) verbundene stationäre Schnurrolle (20), eine koaxial zu dieser drehbar gelagerte Spultrommel (14) mit Schnurfangbügel, die mittels einer Handkurbel (18) über ein Getriebe antreibbar ist, wobei die axiale Bewegung der Schnurrolle (20) mit der Drehbewegung der Spultrommel (14) über das Getriebe gekoppelt ist, und eine einstellbare Reibungsbremse zum Bremsen der Schnurrollendrehung mit einem mit der Schnurrollenwelle (22) verbundenen ersten Bremswiderlager (34, 50), einem axial verstellbaren, gegenüber dem Gehäuse (10) unverdrehbaren zweiten Bremswiderlager (40, 42), dadurch gekennzeichnet, dass zwischen den beiden Bremswiderlagern Bremsscheiben (32) eingespannt sind, dass das erste Bremswiderlager eine die Bremsscheiben (32) axial abstützende, gegenüber der Schnurrollenwelle (22) frei drehbare Lagerhülse (34) und eine mit der Schnurrollenwelle (22) drehfest, aber axial verschiebbar verbundene Kupplungshülse (50) umfasst und dass die Lagerhülse (34) und die Kupplungshülse (50) zum Eingriff miteinander bestimmte Kupplungsmittel (62, 66) aufweisen, die durch eine Axialverschiebung der Kupplungshülse (50) in und ausser Eingriff bringbar sind.

2. Angelwinde nach Anspruch 1, dadurch gekennzeichnet, dass die Kupplungsmittel von einer Keilverzahnung (62, 66) gebildet sind, die an axial ineinander schiebbaren Umfangsflächen von Lagerhülse (34) und Kupplungshülse (50) ausgebildet sind.

3. Angelwinde nach Anspruch 1, dadurch gekennzeichnet, dass die Kupplungsmittel von Kupplungsklauen gebildet sind, die an einander zugekehrten achsnormalen Flächen und Lagerhülse (34) und Kupplungshülse (50) ausgebildet sind.

4. Angelwinde nach einem der Ansprüche 1 bis 3, dadurch gekennzeichnet, dass an der Kupplungshülse (50) und dem Gehäuse (10) zum Eingriff miteinander bestimmte zweite Kupplungsmittel (78, 80) ausgebildet sind, die durch eine Axialverschiebung der Kupplungshülse (50) in eine zweite Kupplungsstellung in Eingriff bringbar sind.

5. Angelwinde nach Anspruch 4, dadurch gekennzeichnet, dass die zweiten Kupplungsmittel Kupplungsklauen (78, 80) umfassen, die an einander zugekehrten achsnormalen Flächen von Gehäuse (10) und Kupplungshülse (50) ausgebildet sind.

6. Angelwinde nach einem der Ansprüche 1 bis 5, dadurch gekennzeichnet, dass die Kupplungshülse (50) in ihre erste Kupplungsstellung vorgespannt ist.

7. Angelwinde nach einem der Ansprüche 1 bis 6, dadurch gekennzeichnet, dass die Kupplungshülse (50) über einen an dem Gehäuse (10) in Raststellungen einrastenden Schieber (54) verstellbar ist, der mit einem Fortsatz (58) in einer Ringnut (60) an der Kupplungshülse (50) eingreift.

8. Angelwinde nach einem der Ansprüche 1 bis 6, dadurch gekennzeichnet, dass die Kupplungshülse (50) mit einem Stellknopf (86) axial fest aber gegenüber diesem frei drehbar verbunden ist und dass der Stellknopf (86) an dem der Schnurrolle (20) fernen Gehäuseende koaxial zur Schnurrollenwelle (22) mittels eines Gewindes grosser Steigung um einen begrenzten Drehwinkel drehbar gelagert ist.

9. Angelwinde nach Anspruch 8, dadurch gekennzeichnet, dass der Stellknopf (86) mindestens in seiner dem Einschalten der Reibungsbremse entsprechenden Stellung arretierbar ist.

10. Angelwinde nach einem der Ansprüche 1 bis 9, dadurch gekennzeichnet, dass das zweite Bremswiderlager ein mit einem Zahnkranz (44) versehenes, in ein gehäusefestes Innengewinde (43) koaxial zur Schnurrollenwelle (22) einschraubbares Einstellrad (42) umfasst und dass der Zahnkranz (44) des Einstellrades (42) mit einem Zahn- oder Schneckenrad (46) kämmt, das drehfest mit einem unmittelbar neben der Handkurbel (18) am Gehäuse (10) gelagerten Einstellknopf (48) verbunden ist.

**Claims**

1. Fishing reel comprising a housing (10), a fixed-spool line reel (20) connected with a shaft (22) which can be moved to-and-fro, a winding drum (14) with bale arm rotatably mounted coaxially with the fixed-spool line reel and which can be driven through gearing by a crank handle (18), the axial movement of the line reel (20) being coupled with the rotary movement of the winding drum (14) through the intermediary of the gearing, and an adjustable friction brake for braking the rotation of the line reel with a first brake thrust bearing (34, 50) connected with the line reel shaft (22), an axially adjustable second brake thrust bearing (40, 42) unable to be rotated relative to the housing (10), characterised in that between the two brake thrust bearings brake discs (32) are clamped, in that the first brake thrust bearing comprises a bearing bushing (34) axially supporting the brake discs (32) and freely rotatable relative to the line reel shaft (22) and a coupling bushing (50) solid in rotation with the line reel shaft (22) but axially displaceably connected therewith, and in that the bearing bushing (34) and the coupling bushing (50) have, for their mutual engagement, specific coupling means (62, 66) which, by means of an axial displacement of the coupling bushing (50), can be engaged and disengaged.

2. Fishing reel according to Claim 1, characterised in that the coupling means are constituted by splines (62, 66) which are formed on peripheral surfaces of the bearing bushing (34) and the coupling bushing (56) able to be pushed axially one into the other.

3. Fishing reel according to Claim 1, characterised in that the coupling means are formed by coupling claws which consist of surfaces of the bearing bushing (34) and coupling bushing (50) perpendicular to the axis and facing each other.

4. Fishing reel according to one of Claims 1 to 3, characterised in that on the coupling bushing (50) and the housing (10) second coupling means (78, 80) intended to engage together are provided which can be brought into engagement in a second coupling position by means of an axial displacement of the coupling bushing (50).

5. Fishing reel according to Claim 4, characterised in that the second coupling means comprise coupling claws (78, 80) which are provided on surfaces of the housing (10) and coupling bushing (50) perpendicular to the axis and facing each other.

6. Fishing reel according to one of Claims 1 to 5, characterised in that the coupling bushing (50) is pretensioned towards its first coupling position.

7. Fishing reel according to one of Claims 1 to 6, characterised in that the coupling bushing (50) is adjustable by means of a slide (54) engaging in lock-in positions on the housing (10) which slide engages by means of an extension (58) in an annular groove (60) on the coupling bushing (50).

8. Fishing reel according to one of Claims 1 to 6, characterised in that the coupling bushing (50) is connected with an adjusting knob (86) axially rigidly but freely rotatably relative thereto, and in that the adjusting knob (86) on the housing end away from the line reel (20) is mounted coaxially with the line reel shaft (22) by means of a screw thread of great pitch in rotatable manner about a limited angle of rotation.

9. Fishing reel according to Claim 8, characterised in that the adjusting knob (86) can be arrested at least in its position corresponding to the engagement of the friction brake.

10. Fishing reel according to one of Claims 1 to 9, characterised in that the second brake thrust bearing has an adjustment wheel (42) provided with a toothed ring (44) able to be screwed into an inner screw thread (43) coacially with the line reel shaft (22), and in that the toothed ring (44) of the adjustment wheel (42) engages with a toothed wheel or a worm wheel (46) which is connected solid in rotation with an adjusting knob (48) mounted directly alongside the crank handle (18) on the housing (10).

**Revendications**

1. Moulinet de pêche comprenant un boîtier (10), une bobine (20) stationnaire pour le fil relié à un arbre (22) pouvant coulisser pour aller et venir en sens axial, un tambour de bobinage (14) monté tournant coaxialement à la bobine (20) avec un étrier de guidage pour le fil, qui peut être actionné au moyen d'une manivelle (18) par l'intermédiaire d'un jeu d'engrenages, dans lequel le mouvement en sens axial de la bobine (20) pour le fil est couplé avec le mouvement de rotation du tambour de bobinage (14) par l'intermédiaire du jeu d'engrenages, et comprenant aussi un frein à friction réglable pour le freinage de la rotation de la bobine pour le fil, avec une première butée de frein (34, 50) reliée à l'arbre (22) de la bobine pour le fil, et une deuxième butée de frein (40, 42) calée en rotation par rapport au boîtier (10), caractérisé en ce qu'entre les deux butées de frein des disques de freinage (32) sont tenus sous contrainte, la première butée de frein comprend un coussinet (34) libre en rotation par rapport à l'arbre (22) de la bobine pour le fil et servant d'appui en sens axial aux disques de freinage (32), ainsi qu'une douille d'accouplement (50) calée en rotation sur l'arbre (22) de la bobine pour le fil mais coulissante en sens axial, et le coussinet (34) ainsi que la douille d'accouplement (50) présentent des moyens d'accouplement (62, 66) aptes à être mis en prise l'un avec l'autre et qui peuvent être engagés ensemble et être désengagés l'un de l'autre par un coulissement en sens axial de la douille d'accouplement (50).

2. Moulinet de pêche selon la revendication 1, caractérisé en ce que les moyens d'accouplement sont constitués par des dents de crabotage (62, 66) qui sont prévues sur des faces périphériques pouvant coulisser l'une dans l'autre du coussinet (34) et de la douille d'accouplement (50).

3. Moulinet de pêche selon la revendication 1, caractérisé en ce que les moyens d'accouplement sont constitués par des griffes d'accouplement qui sont disposées sur les surfaces perpendiculaires à l'axe, tournées l'une vers l'autre, du coussinet (34) et de la douille d'accouplement (50).

4. Moulinet selon l'une quelconque des revendications 1 à 3, caractérisé en ce que sont prévus sur la douille d'accouplement (50) et sur le boîtier (10) des deuxièmes moyens d'accouplement (78, 80) aptes à être mis en prise l'un avec l'autre, qui peuvent être mis en prise par un coulissement en sens axial de la douille d'accouplement (50) à une deuxième position d'accouplement.

5. Moulinet de pêche selon la revendication 4, caractérisé en ce que les deuxièmes moyens d'accouplement comprennent des griffes d'accouplement (78, 80) qui sont prévues sur des surfaces perpendiculaires à l'axe, tournées l'une vers l'autre, du boîtier (10) et du coussinet (50).

6. Moulinet de pêche selon l'une quelconque des revendications 1 à 5, caractérisé en ce que la douille d'accouplement (50) est précontrainte en direction de sa première position d'accouplement.

7. Moulinet de pêche selon l'une quelconque des revendications 1 à 6, caractérisé en ce que la douille d'accouplement (50) est réglable en position au moyen d'un poussoir (54) s'encliquetant sur le boîtier (10) à des positions d'encliquetage, ce poussoir s'engageant par un appendice (58) dans une rainure annulaire (60) prévue sur la douille d'accouplement (50).

8. Moulinet de pêche selon l'une quelconque des revendications 1 à 6, caractérisé en ce que la douille d'accouplement (50) est réunie à un bouton de réglage (86) en étant fixée en sens axial mais laissée libre en rotation par rapport à ce dernier et ce même bouton de réglage (86) est monté à l'extrémité du boîtier éloignée de la bobine (20) pour le fil coaxialement à l'arbre (22) de la bobine au moyen d'un filetage à grand pas pour pouvoir tourner d'un angle de rotation limité.

9. Moulinet de pêche selon la revendication 8, caractérisé en ce que le bouton de réglage (86) peut être immobilisé au moins à sa position correspondant à l'enclenchement du frein à friction.

10. Moulinet de pêche selon l'une quelconque des revendications 1 à 9, caractérisé en ce que la deuxième butée de frein comprend une roue de réglage (42) prévue avec une couronne dentée (44) vissable coaxialement à l'arbre (22) de la bobine pour le fil dans un filetage intérieur solidaire du boîtier, et la couronne dentée (44) de la roue de réglage (42) engrène avec une roue dentée ou une vis sans fin (46) qui est calée en rotation avec un bouton de réglage (48) monté sur le boîtier (10) immédiatement à côté de la manivelle (18).

FIG. 1

EP 0 150 061 B1

FIG. 2

EP 0 150 061 B1